# EUROPÄISCHE PATENTSCHRIFT

(11) **EP 1 327 284 B1**
(45) Veröffentlichungstag und Bekanntmachung des Hinweises auf die Patenterteilung: **30.07.2008**
(21) Anmeldenummer: 01971700.8
(22) Anmeldetag: 08.09.2001
(51) Int. Cl.: H01Q 1/32, H01Q 13/10, H01Q 21/29, H04B 7/08

(54) **STOSSFÄNGERANTENNENANORDNUNG**
BUMPER-AERIAL ASSEMBLY
ENSEMBLE PARE-CHOCS AVEC ANTENNE

(30) Priorität: 12.09.2000 DE 10044936
(43) Veröffentlichungstag der Anmeldung: 16.07.2003
(73) Patentinhaber: ROBERT BOSCH GMBH, 70442 Stuttgart (DE)
(72) Erfinder: RADDANT, Hans-Joachim, 14055 Berlin (DE); WILKEN, Heinrich, 10437 Berlin (DE)
(86) Internationale Anmeldenummer: PCT/DE2001/003451
(87) Internationale Veröffentlichungsnummer: WO 2002/023668

(56) Entgegenhaltungen:
- EP-A- 0 892 458
- EP-A- 0 892 459
- EP-A- 0 952 625
- EP-B- 0 580 590
- DE-C- 19 636 584
- US-A- 4 692 769

## Beschreibung

### Stand der Technik

Die Erfindung geht von einer Stoßfängerantennenanordnung nach der Gattung des Hauptanspruchs aus. Eine solche Anordnung ist bekannt aus der DE 38 02 130 A1.

Bei der DE 38 02 130 A1 dient der von der Fahrzeugkarosserie isoliert angebrachte Stoßfänger als Antenne. An seinen Enden sind Antennenanschlüsse vorgesehen, die unterschiedliche Antennensignale für einen Diversity-Empfänger liefern.

Aus der EP 0 580 590 B1 sind zwei im Stoßfänger eines Kraftfahrzeugs integrierte UKW-Einzelantennen mit unterschiedlicher Richtcharakteristik bekannt, die so zusammengeschaltet sind, dass ein möglichst gutes Rundum-Richtdiagramm für die Antennenspannung erreicht wird. Eine UKW-Einzelantenne besteht dabei aus einer elektrisch leitfähigen Fläche, die über eine in Serie geschaltete Induktivität auf die Empfangsfrequenz im UKW-Rundfunkbereich abgestimmt ist.

Aus der EP 0 892 459 ist eine Antennenanordnung bekannt, bei der das Antennenelement durch eine elektrisch leitende Fläche gebildet ist und diese Fläche mit Schlitzen versehen ist, um Bandbreite und Richtcharakteristik zu verändern.

### Vorteile der Erfindung

Die erfindungsgemäße Stoßfängerantennenanordnung mit den Merkmalen des Hauptanspruchs hat den Vorteil, dass sich zusätzliche, einen breitbandigeren Frequenzbereich unterstützende Resonanzen erzielen lassen, die durch die erfindungsgemäße Umlenkung der Ströme so eingestellt werden können, dass ein gleichmäßiger Antennenfaktor bzw. eine gleichmäßige Antennenverstärkung über den gesamten gewünschten Betriebsfrequenzbereich erreichbar ist. Es lassen sich mindestens zwei voneinander unabhängige Antennen im Stoßfänger integrieren, die beispielsweise für ein Antennendiversity-System verwendet werden können. Aufgrund der unterschiedlichen Stellen für die Antennenanschlüsse auf der elektrisch leitfähigen Fläche lässt sich durch die gebildeten Antennen ein insgesamt vergleichsweise großer Frequenzbereich abdecken, beispielsweise der komplette TV-Bereich von Band bis Band V und zusätzlich der UKW-Rundfunkbereich. Weiterhin lassen sich durch die verschiedenen Stellen für die Antennenanschlüsse unterschiedliche Richtdiagramme für die einzelnen dem jeweiligen Antennenanschluss zugeordneten Antennen realisieren. Dies erhöht die Empfangswahrscheinlichkeit der gesamten Stoßfängcrantennenanordnung bei Empfang von Signalen aus verschiedenen Richtungen.

Durch die in den Unteransprüchen aufgeführten Maßnahmen sind vorteilhafte Weiterbildungen und Verbesserungen der im Hauptanspruch angegebenen Stoßfängerantennenanordnung möglich.

Besonders vorteilhaft ist es, dass sich die elektrisch leitfähige Fläche im wesentlichen über die gesamte Breite des Stoßfängers erstreckt. Die elektrisch leitfähige Fläche wird somit vergleichsweise groß, so dass sich auch niedrige Frequenzen noch gut empfangen lassen, die beispielsweise im Fernsehband I liegen.

Ein weiterer Vorteil besteht darin, dass gleichzeitig mehrere Eingänge des Diversity-Empfängers aktiv sein können. Auf diese Weise können die Antennensignale der verschiedenen Antennenanschlüsse phasen- und/oder amplitudenmäßig addiert werden, um beispielsweise eine gewünschte Richtcharakteristik für Diversity-Empfang einzustellen.

Ein weiterer Vorteil besteht darin, die nicht aktiven Eingänge des Diversity-Empfängers, insbesondere durch Schalter elektrisch vom jeweils zugehörigen Antennenanschluss zu trennen. Auf diese Weise lässt sich beispielsweise ein Diversity-Empfang realisieren, bei dem nur diejenige Antenne bzw. nur derjenige Antennenanschluss an den Diversity-Empfänger angeschlossen ist, der das Signal mit der höchsten Empfangsfeldstärke oder dem geringsten Störanteil liefert.

Ein weiterer Vorteil besteht darin, dass die Ansteuerung eines gesteuerten Schalters durch Übertragung eines Steuersignals auf dem dem Schalter zugeordneten Antennenkabel erfolgt, wobei das Steuersignal einem Antennensignal überlagert ist. Auf diese Weise ist zur Ansteuerung des Schalters keine separate Steuerleitung erforderlich.

### Zeichnung

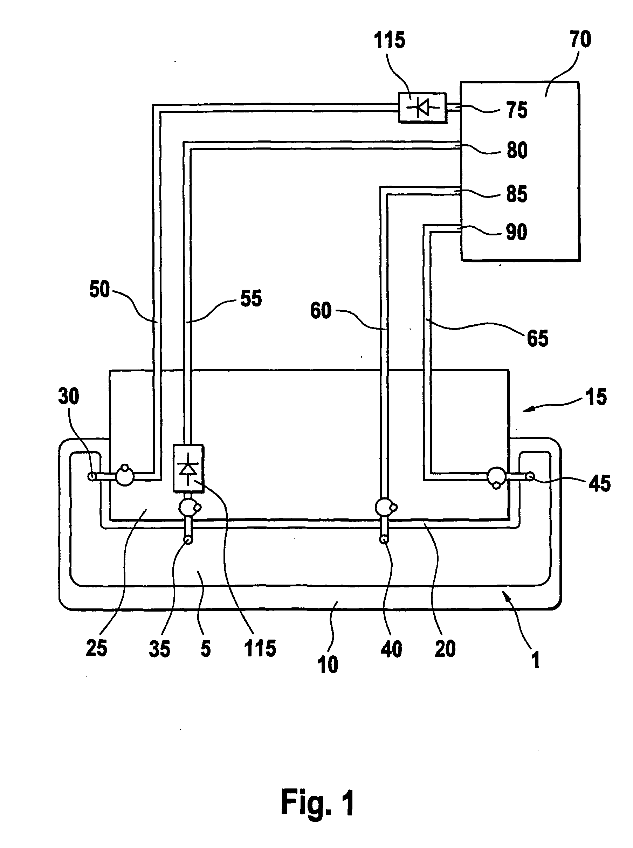

Ausführungsbeispiele der Erfindung sind in der Zeichnung dargestellt und in der nachfolgenden Beschreibung näher erläutert.
Es zeigen Figur 1 eine Fahrzeugkarosserie mit einer Stoßfängerantenennanordnung für Diversity-Empfang,
Figur 2 eine schematische Darstellung der Stoßfängerantennenanordnung unter Verwendung von zusätzlichen Schlitzen,
Figur 3 eine Schnittdarstellung von Befestigungsmitteln zur Befestigung eines Antennenelementes der Stoßfängerantennenanordnung an der Fahrzeugkarasserie gemäß einer ersten Ausführungsform,
Figur 4 eine Schnittdarstellung der Befestigungsmittel in einer allgemeinen Form,
Figur 5 eine Schnittdarstellung der Befestigungsmittel gemäß einer zweiten Ausführungsform und
Figur 6 eine Schnittdarstellung der Befestigungsmittel gemäß einer dritten Ausführungsform.

### Beschreibung der Ausfühningsbeispiele

In Figur 1 kennzeichnet 15 eine Fahrzeugkarosserie, von der lediglich ein Teil im Bereich eines Stoßfängers 10 dargestellt ist. Der Stoßfänger 10 ist dabei an einem Karosserieblech 25 der Fahrzeugkarosserie 15 montiert. Im Stoßfänger 10 und elektrisch isoliert von diesem ist ein Antennenelement 5 in Form einer elektrisch leitfähigen Fläche angeordnet. Die elektrisch leitfähige Fläche 5 bildet dabei einen ersten Schlitz 20 mit dem Karosserieblech 25, der geeignet ist, eine elektromagnetische Welle zu führen. Gemäß Figur 1 umfasst die elektrisch leitfähige Fläche 5 an verschiedenen Stellen einen ersten Antennenanschluss 30, einen zweiten Antennenanschluss 35, einen dritten Antennenanschluss 40 und einen vierten Antennenanschluss 45. Die elektrisch leitfähige Fläche 5 und die Antennenanschlüsse 30, 35, 40, 45 bilden eine Stoßfängerantennenanordnung 1. Dabei wird durch die Länge der elektrisch leitfähigen Fläche 5 unter Berücksichtigung der gemäß Figur 1 abgewinkelten Enden der elektrisch leitfähigen Fläche 5 eine untere Grenze für die untere Grenzfrequenz für den Betrieb der Stoßfängerantennenanordnung 1 festgelegt. Diese Länge wird beispielsweise durch den ersten Antennenanschluss 30 und den vierten Antennenanschluss 45 fast vollständig ausgenutzt, so dass für diese beiden Antennenanschlüsse 30, 45 die elektrisch leitfähige Fläche 5 über nahezu ihre gesamte Länge unter Berücksichtigung der abgewinkelten Enden eine λ/4-Resonanz und weitere Resonanzen bei λ/4 + nλ/2 mit n = 1, 2, 3, ... bildet. Die obere Grenze für die untere Grenzfrequenz der Stoßfängerantennenanordnung 1 wird bei einem Antennenanschluss etwa in der Mitte der elektrisch leitfähigen Fläche 5 erreicht, weil dann nur noch die halbe Länge der elektrisch leitfähigen Fläche 5 für die Ausbildung einer λ/4-Resonanz und weiterer Resonanzen bei λ/4 + nλ/2 mit n = 1, 2, 3, ... zur Verfügung steht. Da der zweite Antennenanschluss 35 und der dritte Antennenanschluss 40 nicht mittig auf der elektrisch leitfähigen Fläche 5 angeordnet sind, liegt die dadurch realisierte untere Grenzfrequenz bei der Ausführungsform nach Figur 1 zwischen der unteren und der oberen Grenze für die untere Grenzfrequenz. Durch die verschiedenen Antennenanschlüsse 30, 35, 40, 45 auf der elektrisch leitfähigen Fläche 5 werden voneinander unabhängige Antennen realisiert, wobei durch jeden Antennenanschluss 30, 35, 40, 45 auf der elektrisch leitfähigen Fläche 5 jeweils eine Antenne entsteht, deren Resonanzen λ/4, λ/4 + nλ/2, n = 1, 2, 3, ... vom Abstand des jeweiligen Antennenanschlusses zum Rand der elektrisch leitfähigen Fläche in Längsrichtung und unter Berücksichtigung der Abwinklung der elektrisch leitfähigen Fläche 5 gemäß Figur 1 abhängen. Aufgrund der unterschiedlichen Stellen, an denen die Antennenanschlüsse 30, 35, 40, 45 auf der elektrisch leitfähigen Fläche 5 angeordnet sind, ergibt sich für jede durch einen solchen Antennenanschluss gebildete Antenne ein unterschiedliches Richtdiagramm, da die Verhältnisse des elektromagnetischen Feldes an den verschiedenen Stellen der Antennenanschlüsse 30, 35, 40, 45 unterschiedlich sind. Dabei sind die Richtdiagramme für jeden der Antennenanschlüsse 30, 35, 40, 45 auch frequenzabhängig, da für die an einem Antennenanschluss erzielbaren Resonanzen von λ/4, λ/4 + nλ/2 mit n = 1, 2, 3, ... unterschiedliche Stromflussrichtungen auf der elektrisch leitfähigen Fläche 5 gebildet werden und somit wiederum unterschiedliche Verhältnisse des elektromagnetischen Feldes bestehen.

Beim Ausführungsbeispiel nach Figur 1 erstreckt sich die elektrisch leitfähige Fläche 5 im wesentlichen über die gesamte Breite des Stoßfängers 10. Dies führt dazu, dass speziell für den ersten Antennenanschluss 30 und den vierten Antennenanschluss 45 eine große Resonanzlänge für die λ/4-Resonanz erzeugt werden kann, so dass sich eine möglichst niedrige untere Grenzfrequenz für den Betrieb der Stoßfängerantennenanordnung 1 ergibt.

Die in Figur 1 gezeigte Stoßfängerantennenanordnung 1 kann für einen Diversity-Empfang genutzt werden. Dazu sind die Antennenanschlüsse 30, 35, 40, 45 über jeweils ein Antennenkabel 50, 55, 60, 65 mit einem Diversity-Empfänger 70 verbunden. Dabei ist der erste Antennenenschluss 30 über ein erstes Antennenkabel 50 mit einem ersten Eingang 75 des Diversity-Empfängers 70 verbunden. Der zweite Antennenanschluss 35 ist über ein zweites Antennenkabel 55 mit einem zweiten Eingang 80 des Diversity-Empfängers 70 verbunden. Der dritte Antennenanschluss 40 ist über ein drittes Antennenkabel 60 mit einem dritten Eingang 85 des Diversity-Empfängaers 70 verbunden. Der vierte Antennenanschluss 45 ist über ein viertes Antennenkabel 65 mit einem vierten Eingang 90 des Diversity-Empfängers 70 verbunden. Dabei ist jeweils der Antennenanschluss 30, 35, 40, 45 mit dem Innenleiter des zugehörige Antennenkabel verbunden, wohingegen der Außenleiter des entsprechenden Antennenkabels mit dem Karosserieblech 25 als Bezugspotential verbunden ist.

Der Diversity-Empfang lässt sich dabei grundsätzlich auf zwei verschiedene Arten realisieren. Bei einer ersten Art des Diversity-Empfangs sind gleichzeitig mehrere der Eingänge 75, 80, 85,90 des Diversity-Empfängers 70 aktiv. Auf diese Weise können die an den den aktiven Eingängen zugeordneten Antennenanschlüssen empfangenen Antennensignale im Diversity-Empfänger 70 phasen- und/oder amplitudenmäßig überlagert werden. Insbesondere in diesem Fall sollte der räumliche Abstand zwischen den Antennenanschlüssen nicht zu klein gewählt werden. Ansonsten ist die Verkopplung zweier eng benachbarter Antennenanschlüsse so groß, dass an diesen beiden Antennenanschlüasen nahezu das gleiche Antennensignal anliegt. Eine Überlagerung der beiden Signale im Diversity-Empfänger 70 führt dann nicht zu einem qualitativ neuen Antennensignal. Daher sollten die Positionen der Antennenanschlüsse 30, 35, 40, 45 auf der elektrisch leitfähigen Fläche 5 so gewählt sein, dass sie mindestens um eine vorgegebene Distanz beabstandet sind, wobei die Distanz derart vorgegeben ist, dass die sich für die einzelnen Antennenanschlüsse 30, 35, 40, 45 ergebenden Antenennsignale wesentlich voneinander unterscheiden. Dann lässt sich im Diversity-Empfänger 70 ein qualitativ neues Antennensignal und eine qualitativ neue Richtcharakteristik für die gesamte Stoßfängerantennenanordnung 1 erzeugen.

Für die beschriebene Betriebsart müssen mindestens zwei der Eingänge 75, 80, 85, 90 des Diversity-Empfängers 70 aktiv sein. Nicht aktive Eingänge des Diversity-Empfängers 70 können elektrisch vom jeweils zugehörigen Antennenanschluss getrennt werden, wozu beispielsweise ein gesteuerter Schalter 115 verwendet werden kann. Der gesteuerte Schalter 115 kann dabei beispielsweise als PIN-Diode ausgebildet sein. Der gesteuerte Schalter 115 kann dabei entweder direkt am Antennenfußpunkt, also zwischen dem entsprechenden Antennenanschluss und dem zugehörigen Antennenkabel oder, bei relativ kurzen Antennenkabeln im zugehörigen Empfängereingang wie in Figur 1 am Beispiel des ersten Eingangs 75 des Diversity-Empfängers 70 schematisch dargestellt angeordnet sein. Zumindest bei Anordnung des gesteuerten Schalters 115 direkt oder zumindest nahe am Antennenfußpunkt bietet sich die Verwendung einer PIN-Diode für den gesteuerten Schalter 115 an, wobei die Ansteuerung vom angeschlossenen Diversity-Empfänger 70 über das zugehörige Antennenkabel mit einem dem Antennensignal überlagerten Steuersignal erfolgen kann. Ein nahe am Antennenfußpunkt angeordneter gesteuerter Schalter 115 in Form einer PIN-Diode ist für das zweite Antennenkabel 55 in Figur 1 schematisch dargestellt.

In einer zweiten Art des Diversity-Empfangs ist nur einer der Eingänge 75, 80, 85, 90 des Diversity-Empfängers 70 aktiv. Dieser Eingang wird auf Störungen des über das angeschlossene Antennenkabel empfangene Signal untersucht. Bei Detektion von Störungen wird auf einen anderen Eingang umgeschaltet und die beschriebene Prozedur für diesen anderen Eingang wiederholt.

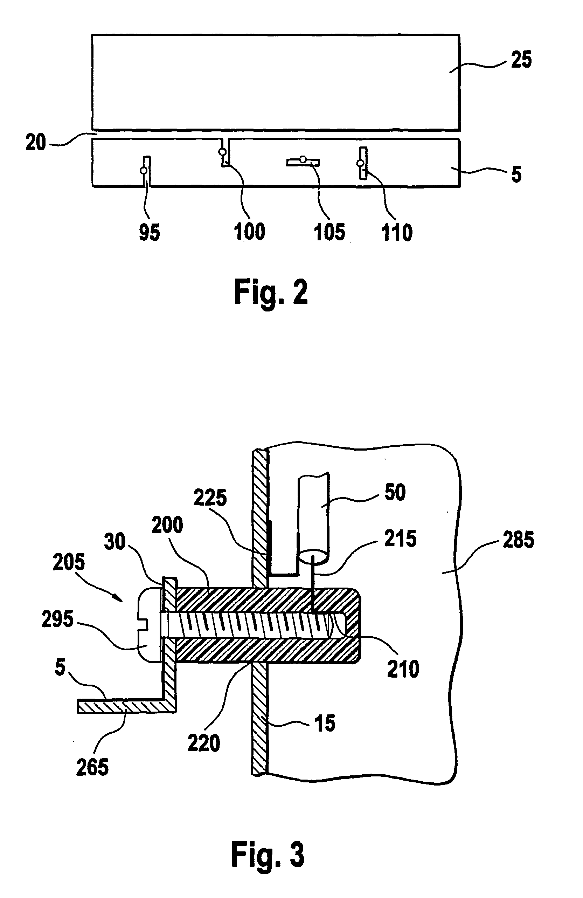

Figur 2 zeigt ein Ausführungsbeispiel, in dem die Stoßfängerantennenanordnung 1 schematisch und ohne Darstellung der Antennenanschlüsse wiedergegeben ist. Die elektrisch leitfähige Fläche 5 bildet dabei wie auch zum ersten Ausführungsbeispiel nach Figur 1 beschrieben den ersten Schlitz 20 mit dem Karosserieblech 25, der geeignet ist, eine elektromagnetische Welle zu führen. Weiterhin umfasst die elektrisch leitfähige Fläche 5 weitere Schlitze 95, 100, 105, 110, die vertikal oder horizontal in der elektrisch leitfähigen Fläche 5 angeordnet sind. Dabei verläuft ein zweiter Schlitz 95 senkrecht zum ersten Schlitz 20 und endet an der dem Karosserieblech 25 abgewandten Seite der elektrisch leitfähigen Fläche 5. Ein dritter Schlitz 100 verläuft ebenfalls senkrecht zum ersten Schlitz 20, beginnt am ersten Schlitz 20 und endet innerhalb der elektrisch leitfähigen Fläche 5. Ein vierter Schlitz 105 verläuft horizontal und somit parallel zum ersten Schlitz 20 inmitten der elektrisch leitfähigen Fläche 5. Ein fünfter Schlitz 110 verläuft wiederum senkrecht zum ersten Schlitz 20 jedoch inmitten der elektrisch leitfähigen Fläche 5. Durch einen oder mehrere Schlitze 95, 100, 105, 110 in der elektrisch leitfähigen Fläche 5 werden die auf der elektrisch leitfähigen Fläche 5 fließenden Ströme umgelenkt, so dass die Stromflusswege verlängert werden. Dadurch verschieben sich die Resonanzfrequenzen der durch die Antennenanschlüsse 30, 35, 40, 45 auf der elektrisch leitfähigen Fläche 5 gebildeten Antennen. Somit lässt sich durch geeignete Anordnung der Schlitze 95, 100, 105, 110 in der elektrisch leitfähigen Fläche 5 eine Feinabstimmung der Resonanzfrequenzen erzielen. Außerdem lassen sich durch geeignete Anordnung eines oder mehrerer der Schlitze 95, 100, 105, 110 in der elektrisch leitfähigen Fläche 5 Ströme derart umlenken, dass sich keine herausragenden Resonanzen bilden, um einen gleichmäßigen Antennenfaktor bzw. eine gleichmäßige Antennenverstärkung über den gesamten gewünschten Betriebsfrequenzbereich der Stoßfängerantennenanordnung 1 zu erreichen. Durch einen oder mehrere Schlitze 95, 100, 105, 110 in der elektrisch leitfähigen Fläche 5 lassen sich somit Hauptresonanzen reduzieren und zusätzliche Resonanzen erzeugen, so dass der gewünschte Betriebsfrequenzbereich auch breitbandiger gemacht werden kann.

Auf diese Weise lässt sich bei herkömmlichen Stoßfängerabmessungen und einer sich über die gesamte Breite des Stoßfängers 10 erstreckenden elektrisch leitfähigen Fläche 5 ein Signalempfang zumindest im kompletten TV-Bereich von Band I bis Band V und im UKW-Rundfunkbercich realisieren.

Aufgrund der Anordnung der Antennenanschlüsse 30, 35, 40, 45 an unterschiedlichen Stellen der elektrisch leitfähigen Fläche 5 unter Einhaltung der vorgegebenen Distanz zwischen zwei benachbarten Antennenanschlüssen ergeben sich für die durch die Antennenanschlüsse 30, 35, 40, 45 gebildeten einzelnen Antennen voneinander unterschiedliche Richtdiagramme, so dass sich die aus verschiedenen Richtungen einfallenden elektromagnetischen Wellen bei Mehrwegeempfang an den verschiedenen Antennen auf unterschiedliche Weise addieren. Auf diese Weise ergibt sich eine hohe Wahrscheinlichkeit, dass bei Umschaltung von einer gerade mit Empfangsstörung betroffenen Antenne auf eine andere Antenne durch den Diversiry-Empfänger 70 die andere Antenne nicht gestört ist.

Die erfindungsgemäße Stoßfängerantennenanordnung 1 lässt sich auch mit mehr oder weniger als vier Antennenanschlüssen realisieren, es sind jedoch mindestens zwei Antennenanschlüsse auf der elektrisch leitfähigen Fläche 5 zur Realisierung der Erfindung erforderlich.

Die Stoßfängerantennenanordnung 1 ist insbesondere für Fahrzeuge ohne festen Dachaufbau, wie Cabriolets geeignet, die nicht mit einer Heckscheibenantenne oder einer Dachantenne ausgerüstet werden können.

Bei der Betriebsart des Diversity-Empfängers 70 mit mehreren aktiven Eingängen können beispielsweise alle Eingänge 75, 80, 85, 90 gemäß Figur 1 gleichzeitig aktiv sein.

Im Vergleich zu einer einzelnen Stoßfängerantenne wird durch die erfindungsgemäße Stoßfängerantennenanordnung mit mehreren voneinander unabhängigen Antennen, die jedoch auf einem gemeinsamen Antennenelement in Form der elektrisch leitfähigen Fläche 5 angeordnet sind, eine Verbesserung des Empfangs erzielt.

Im Folgenden wird die Befestigung der elektrisch leitfähigen Fläche 5 an der Fahrzeugkarosserie 15 beschrieben. Vor allem für den Fall, dass an der elektrisch leitfähigen Fläche 5 mehrere Antennenanschlüsse 30, 35, 40, 45 angeordnet sind, wäre der Montageaufwand zur Befestigung der elektrisch leitfähigen Fläche 5 an der Fahrzeugkarosserie 15 sehr groß, wenn die elektrischen Verbindungen der Antennenanschlüsse 30, 35, 40, 45 mit dem im Innern der Fahrzeugkarosserie 15 jeweils zugeordneten Antennenkabel 50, 55, 60, 65 und die mechanischen Verbindungen der elektrisch leitfähigen Fläche 5 zur Fahrzeugkarosserie 15 getrennt voneinander durchgeführt werden müssen. Aus diesem Grunde wird die elektrisch leitende Fläche 5 am Ort der Antennenanschlüsse 30, 35, 40, 45 sowohl elektrisch an die zugeordneten Antennenkabel 50, 55, 60, 65 im Innern der Fahrzeugkarosserie 15 angeschlossen als auch mechanisch mit der Fahrzeugkarosserie 15 verbunden.

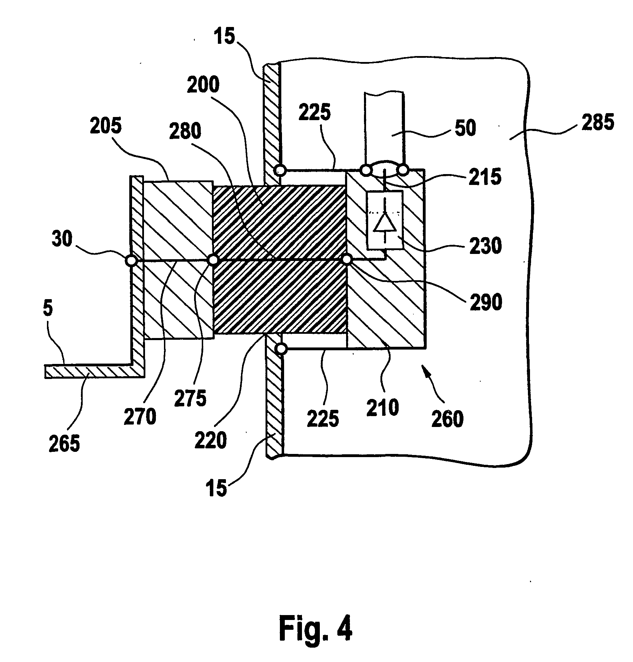

Allgemein läßt sich diese mechanische und elektrische Verbindung gemäß der Darstellung nach Figur 4 realisieren. Dabei ist in der Karosserie 15 eine Öffnung 220 vorgesehen, durch die ein Dübel 200 geführt ist, und zwar derart, dass er zur Fahrzeugkarosserie 15 hin wasserdicht abschließt und aus elektrisch isolierendem Material, beispielsweise aus Kunststoff ausgebildet ist. Der Dübel 200 nimmt außerhalb und elektrisch von der Fahrzeugkarosserie 15 isoliert ein äußeres Befestigungsteil 205 auf. Der Dübel 200 und das äußere Befestigungsteil 205 bilden Befestigungsmittel, die einen ersten Träger 265 mit der darauf angeordneten elektrisch leitfähigen Fläche 5 an der Fahrzeugkarosserie 15 befestigen, wobei aufgrund der Ausbildung des Dübels 200 aus elektrisch isolierendem Material die elektrisch leitfähige Fläche 5 elektrisch von der Fahrzeugkarosserie 15 isoliert ist. Der erste Träger 265 mit der elektrisch leitfähigen Fläche 5 wird dabei von dem äußeren Befestigungsteil 205 getragen. Die elektrisch leitfähige Fläche 5 weist dabei im Bereich des äußeren Befestigungsteils 205 stellvertretend den ersten Antennenanschluss 30 auf. Über eine erste elektrisch leitende Verbindung 270 ist der erste Antennenanschluss 30 mit einer ersten Verbindungsstelle 275 am Übergang zwischen dem äußeren Befestigungsteil 205 und dem Dübel 200 verbunden. Die erste Verbindungsstelle 275 verbindet die erste elektrisch leitende Verbindung 270 mit einem Durchführungsleiter 280, der beispielsweise in Form eines Drahtes durch den Dübel 200 hindurchgeführt ist und zu einer zweiten Verbindungsstelle 290 im Inneren 285 der Fahrzeugkarosserie 15 geführt ist. Im Inneren 285 der Fahrzeugkarosserie 15 nimmt der Dübel 200 ein inneres Kontaktteil 210 auf. Das innere Kontaktteil 210 stellt die elektrisch leitende Verbindung zwischen dem ersten Antennenanschluss 30 einerseits durch den Dübel 200 hindurch und andererseits einem Innenleiter 215 des dem ersten Antennenanschluss 30 zugeordneten ersten Antennenkabels 50 sicher. Somit ist die zweite Verbindungsstelle 290 am Übergang zwischen dem Dübel 200 und dem inneren Kontaktteil 210 angeordnet und verbindet den Durchführungsleiter 280 mit dem Innenleiter 215 des ersten Antennenkabels 50 im Innern 285 der Fahrzeugkarosserie 15. Optional kann das innere Kontaktteil 210 derart ausgebildet bzw. vergrößert sein, dass eine elektronische Schaltung 230, beispielsweise ein elektrischer Verstärker im inneren Kontaktteil 210 angeordnet und einerseits eingangsseitig der elektronischen Schaltung 230 elektrisch leitend mit der zweiten Verbindungsstelle 290 und somit dem ersten Antennenanschluss 30 durch den Dübel 200 hindurch und andererseits ausgangsseitig der elektronischen Schaltung 230 mit dem Innenleiter 215 des dem ersten Antennenanschluss 30 zugeordneten ersten Antennenkabels 50 elektrisch leitend verbunden ist. Ein Außenleiter 225 des ersten Antennenkabels 50 ist im Bereich der Öffnung 220 der Fahrzeugkarosserie 15 mit der Fahrzeugkarosserie 15 elektrisch leitend verbunden. Dabei kann die Verbindung des Außenleiters 225 des ersten Antennenkabels 50 mit der Fahrzeugkarosserie 15 als Abdeckhaube 260 ausgebildet sein, die den Dübel 200 im Innern 285 der Fahrzeugkarosserie 15 umschließt. Auf diese Weise wird der erste Antennenanschluss 30 vollständig durch die Fahrzeugkarosserie 15 und die Abdeckhaube 260 vor aus dem Innern 285 der Fahrzeugkarosserie 15 erzeugten elektrischen Störsignalen abgeschirmt, so dass das vom ersten Antennenanschluss 30 ausgekoppelte Antennensignal weitgehend frei von Störungen dem ersten Antennenkabel 50 zugeführt werden kann.

Der erste Träger 265 ist fest mit dem äußeren Befestigungsteil 205 verbunden. Das erste Antennenkabel 50 ist fest mit dem inneren Kontaktteil 210 verbunden.

Das äußere Befestigungsteil 205, der Dübel 200 und das innere Kontaktteil 210 lassen sich auf verschiedene Weise kombinieren, wobei die mechanische Verbindung zwischen diesen Teilen unlösbar, d. h. fest oder lösbar sein kann. Lösbare Verbindungen lassen sich beispielsweise durch Schraub- oder Rastverbindungen realisieren.

Die mechanische Verbindung zwischen dem Dübel 200 und der Fahrzeugkarosserie 15 ist immer lösbar, aber derart ausgerührt, dass sie im montierten Zustand des Dübels 200 verriegelt ist und somit nicht versehentlich aus der Öffnung 220 herausfallen kann. Die mechanische Verbindung zwischen dem äußeren Befestigungsteil 205 und dem Dübel 200 sowie die mechanische Verbindung zwischen dem Dübel 200 und dem inneren Kontaktteil 210 kann jeweils lösbar ausgeführt sein. Es kann alternativ vorgesehen sein, dass die mechanische Verbindung zwischen dem äußeren Kontaktteil 205 und dem Dübel 200 fest ist und die mechanische Verbindung zwischen dem Dübel 200 und dem inneren Kontaktteil 210 lösbar ist. Weiterhin kann es alternativ vorgesehen sein, dass die mechanische Verbindung zwischen dem äußeren Kontaktteil 205 und dem Dübel 200 lösbar ausgebildet ist und die mechanische Verbindung zwischen dem Dübel 200 und dem inneren Kontaktteil 210 fest ausgebildet ist.

Im Folgenden wird die gemäß Figur 4 allgemein beschriebene Konstruktion anhand dreier Ausführungsformen konkretisiert.

Gemäß einer ersten Ausführungsform nach Figur 3, bei der gleiche Bezugszeichen gleiche Elemente wie in Figur 4 kennzeichnen, ist das äußere Befestigungsteil 205 als elektrisch leitfähige Schraube ausgebildet. Der Dübel 200 umfasst ein nach außen, d. h. vom Inneren 285 der Fahrzeugkarosserie 15 abgewandtes offenes Sackloch mit Innengewinde, in das die Schraube 205 eingeschraubt ist. Dabei ist der erste Träger 265 zwischen den Kopf 295 der Schraube 205 und den Dübel 200 kraftschlüssig eingeklemmt, so dass auf diese Weise die elektrisch leitfähige Fläche 5 über die Schraube 205 und den Dübel 200 fest mit der Fahrzeugkarosserie 15 mechanisch verbunden ist. Im Inneren 285 der Fahrzeugkarosserie 15 ist das innere Kontaktteil 210 als elektrisch leitfähiger Kontaktstreifen ausgebildet, der in den Dübel 200 wasserdicht eingespritzt ist und mit der eingedrehten Schraube 205 kontaktiert. Der elektrisch leitfähige Kontaktstreifen 210 ist andererseits elektrisch leitend mit dem Innenleiter 215 des ersten Antennenkabels 50 verbunden. Da die elektrisch leitfähige Fläche 5 auf dem ersten Träger 265 auch im Bereich des Kopfes 295 der Schraube 205 aufliegt, steht sie mit dem Kopf 295 der Schraube 205 aufgrund der beschriebenen mechanischen Schraubverbindung elektrisch leitend in Verbindung, so dass auf diese Weise eine elektrisch leitfähige Verbindung von der elektrisch leitfähigen Fläche 5 bis zum Innenleiter 215 des ersten Antennenkabels 50 gebildet wird. Die elektrisch leitfähige Fläche 5 bildet somit im Bereich des Kopfes 295 der Schraube 205 den ersten Antennenanschluss 30. Der Außenleiter 225 des ersten Antennenkabels 50 ist, wie bereits in Figur 4 beschrieben, elektrisch leitend mit der Fahrzeugkarosserie 15 im Bereich der Öffnung 220 verbunden. Mit der gemäß Figur 3 beschriebenen Anordnung ist es auf einfache Weise möglich, durch Eindrehen der Schraube 205 in den Dübel 200 sowohl die mechanische Befestigung der elektrisch leitfähigen Fläche 5 an der Fahrzeugkarosserie 15 als auch die elektrische Kontaktierung des durch die elektrisch leitfähige Fläche 5 gebildeten Antennenelementes mit dem weiterführenden ersten Antennenkabel 50 durchzuführen.

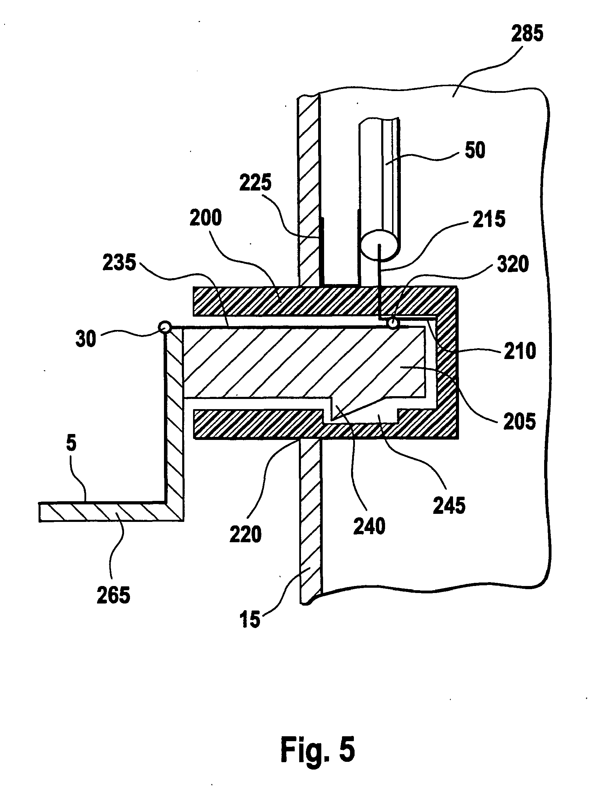

In einer zweiten Ausführungsform gemäß Figur 5 ist der erste Träger 265 einstückig mit dem äußeren Befestigungsteil 205 verbunden. Der erste Träger 265 und das äußere Befestigungsteil 205 können dabei aus elektrisch isolierendem Material, beispielsweise aus Kunststoff gebildet sein, wobei das äußere Befestigungsteil 205 die Form eines Bolzens haben kann, der in den Dübel 200 eingeführt und durch eine Rastverbindung mit diesem lösbar, aber kraftschlüssig verbunden ist. Auch in Figur 5 kennzeichnen gleiche Bezugszeichen gleiche Elemente wie in den Figuren 3 und 4. Gemäß der zweiten Ausführungsform nach Figur 5 muss das äußere Befestigungsteil 205 jedoch einen elektrisch leitfähigen Teil 235 aufweisen, der nach Einführung des äußeren Befestigungsteils 205 in den Dübel 200 mit dem inneren Kontaktteil 210 kontaktieren kann, wobei das innere Kontaktteil 210 bei der zweiten Ausführungsform nach Figur 5 genauso ausgebildet sein soll wie bei der ersten Ausführungsform nach Figur 3. Der elektrisch leitende Teil 235 des äußeren Befestigungsteils 205 geht dabei in Richtung zum ersten Träger 265 in den ersten Antennenanschluss 30 im Bereich der Öffnung des Dübels 200 und somit zur elektrisch leitfähigen Fläche 5 über, so dass auf diese Weise eine elektrisch leitfähige Verbindung zwischen der elektrisch leitfähigen Fläche 5, dem dortigen ersten Antennenanschluss 30, dem inneren Kontaktteil 210 und dem Innenleiter 215 des ersten Antennenkabels 50 gebildet und somit der elektrische Anschluss des Antennenelementes sichergestellt wird. Auch der Anschluss des Außenleiters 225 des ersten Antennenkabels 50 an die Fahrzeugkarosserie 15 ist bei der zweiten Ausführungsform nach Figur 5 wie bei der ersten Ausführungsform nach Figur 3 ausgebildet und befindet sich im Bereich der Öffnung 220. Diese Verbindung stellt in allen beschriebenen Ausführungsformen die notwendige Verbindung des Außenleiters 225 des ersten Antennenkabels 50 zu einer Bezugspotenzialfläche dar. Das erste Antennenkabel 50 ist in allen beschriebenen Ausführungsformen als Koaxialkabel ausgebildet.

Die Rastverbindung des äußeren Befestigungsteils 205 mit dem Dübel 200 ist gemäß der zweiten Ausführungsform nach Figur 5 derart ausgebildet, dass das äußere Befestigungsteil 205 erste Rastmittel 240, beispielsweise in Form einer Rastnase umfasst, die mit zweiten Rastmitteln 245 des Dübels 200, insbesondere einer Rastöffnung die beschriebene Rastverbindung eingeht. Die Rastverbindung zwischen dem äußeren Befestigungsteil 205 und dem Dübel 200 wird im Folgenden als erste Rastverbindung bezeichnet. Sie kann natürlich auch dadurch realisiert werden, dass eine Rastnase des Dübels 200 in eine Rastöffnung des äußeren Befestigungsteils 205 eingreift. Die Rastnase schnappt dabei in jedem Fall beim Einführen des äußeren Befestigungsteils 205 in den Dübel in die zugeordnete Rastöffnung ein. Es könnte natürlich auch mehr als eine erste Rastverbindung zwischen dem äußeren Befestigungsteil 205 und dem Dübel 200 vorgesehen sein, beispielsweise, um eine noch stabilere mechanische Befestigung des ersten Trägers 265 mit der elektrisch leitfähigen Fläche 5 an der Fahrzeugkarosserie 15 zu ermöglichen.

Der Dübel gemäß der zweiten Ausführungsform nach Figur 5 ist dabei ansonsten wie auch gemäß der ersten Ausführungsform nach Figur 3 als nach außen offenes Sackloch, diesmal jedoch ohne Innengewinde ausgebildet. Das elektrisch leitfähige Teil 235 des äußeren Befestigungsteils 205 kann beispielsweise als flächenhaft ausgebildeter elektrischer Leiter ausgebildet sein.

Bei der zweiten Ausführungsform nach Figur 5 kann die Montage des Antennenelementes beispielsweise in der Serienfertigung zeitsparend durch einfaches Einklipsen des äußeren Befestigungsteils 205 in den Dübel 200 erfolgen.

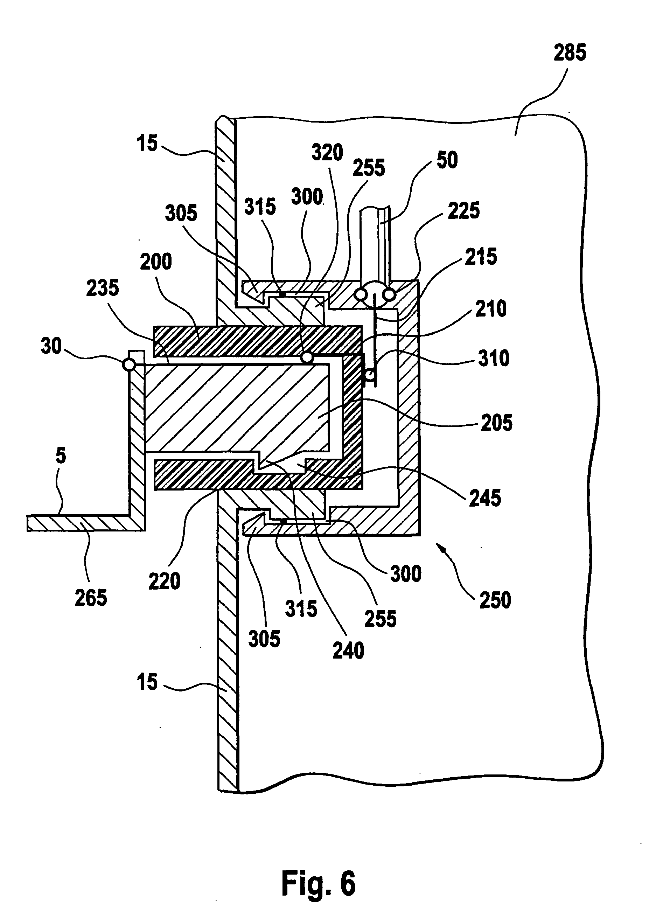

Ausgehend von der zweiten Ausführungsform nach Figur 5 zeigt Figur 6 eine dritte Ausführungsform für die Befestigung der elektrisch leitfähigen Fläche 5 an der Fahrzeugkarosserie 15 und deren elektrische Kontaktierung mit dem ersten Antennenkabel 50. Dabei kennzeichnen wiederum gleiche Bezugszeichen gleiche Elemente wie in den Figuren 3, 4 und 5. Das äußere Befestigungsteil 205, dessen Verbindung mit dem ersten Träger 265, der Dübel 200 und die erste Rastverbindung sind dabei wie bei der zweiten Ausführungsform nach Figur 5 ausgebildet. Unterschiedlich ist nun das innere Kontaktteil ausgebildet, dem neben dem wasserdicht in den Dübel 200 eingespritzten elektrisch leitfähigen Kontaktstreifen 210 nun auch ein zweiter Träger 250 zugeordnet ist, der aus elektrisch leitfähigem Material beispielsweise metallisch ausgebildet ist und direkt mit dem Außenleiter 225 des ersten Antennenkabels 50 elektrisch leitend verbunden ist. Das erste Antennenkabel 50 kann auf diese Weise auch mechanisch am zweiten Träger 250 befestigt und von diesem aufgenommen werden. Über eine zweite Rastverbindung ist der zweite Träger 250 gemäß der dritten Ausführungsform nach Figur 6 mit der Fahrzeugkarosserie 15 im Innern 285 der Fahrzeugkarosserie 15 im Bereich des Dübels 200 verrastet. Dazu weist der zweite Träger 250 gemäß der dritten Ausführungsform nach Figur 6 mindestens zwei Rastöffnungen 300 auf, in die Rastnasen 255 der Fahrzeugkarosserie 15 eingreifen. Die Rastnasen 255 der Fahrzeugkarosserie 15 umschließen dabei andererseits den Dübel 200 zumindest teilweise, so dass der zweite Träger 250 vom Inneren 285 der Fahrzeugkarosserie 15 auf den Dübel 200 aufgesetzt ist. Natürlich kann die zweite Rastverbindung auch durch Rastnasen des zweiten Trägers 250, die in Rastöffnungen der Fahrzeugkarosserie 15 eingreifen, gebildet sein, wobei in diesem Fall ebenfalls der die Rastöffnungen der Fahrzeugkarosserie 15 tragende Teil den Dübel 200 zumindest teilweise umschließt. Die zweite Rastverbindung wird bei der in Figur 6 gezeigten dritten Ausführungsform dadurch hergestellt, dass der zweite Träger 250 vom Inneren 285 der Fahrzeugkarosserie 15 in Richtung zum Dübel 200 auf diesen aufgesteckt wird, wobei die Rastöffnungen 300 des zweiten Trägers 250 abschließende Rasthaken 305 bedingt durch die Rastnasen 255 der Fahrzeugkarosserie 15 zunächst nach außen weggedrückt werden und am Ende der Rastnasen 255 wieder zurückfedern, um die Rastnasen 255 der Fahrzcugkarosscrie 15 zu hintergreifen und auf diese Weise eine kraftschlüssige Verbindung zwischen dem zweiten Träger 250 und der Fahrzeugkarosserie 15 herzustellen. Der zweite Träger 250 ist aus diesem Grund insbesondere im Bereich seiner Rastöffnungen 300 und seiner Rasthaken 305 elastisch ausgebildet Beim Einstecken des zweiten Trägers 250 auf die Fahrzeugkarosserie 15 mittels der zweiten Rastverbindung wird das erste Antennenkabel 50 dem Dübel 200 zugeführt, wobei sein herausragender Innenleiter 215 in elektrisch leitenden Kontakt mit dem elektrisch leitfähigen Kontaktstreifen 210 kommt. Dies ist durch eine dritte Verbindungsstelle 310 gemäß Figur 6 dargestellt. Durch die zweite Rastverbindung kontaktiert der elektrisch leitfähige zweite Träger 250 mit der Fahrzeugkarosserie 15, was durch die beiden vierten Verbindungsstellen 315 in Figur 6 dargestellt ist und wodurch der Außenleiter 225 des ersten Antennenkabels 50 mit der Hezugspotenzialfläche verbunden wird, und zwar im Bereich wiederum der Öffnung 220 der Fahrzeugkarosserie 15 wie auch in den vorherigen beiden Ausführungsformen nach Figur 3 und Figur 5. Die elektrisch leitende Verbindung zwischen dem Innenleiter 215 des ersten Antennenkabels 50 und der elektrisch leitfähigen Fläche 5 wird nun bei der dritten Ausführungsform gemäß Figur 6 Ober die dritte Verbindungsstelle 310, den elektrisch leitfähigen Kontaktstreifen 210, der wiederum wasserdicht in den Dübel 200 eingespritzt ist, die elektrisch leitfähige Verbindung mit dem elektrisch leitfähigen Teil 235 des äußeren Befestigungsteils 205 und den ersten Antennenanschluss 30 hergestellt. Die Verbindung zwischen dem elektrisch leitfähigen Kontaktstreifen 210 und dem elektrisch leitfähigen Teil 235 des äußeren Befestigungsteils 205 ist dabei in den Figuren 5 und 6 als fünfte Verbindungsstelle 320 **gekennzeichnet.**

Bei der dritten Ausführungsform nach Figur 6 kann auch das erste Antennenkabel 50 über den zweiten Träger 250 einfach und somit beispielsweise in der Serienfertigung zeitsparend durch einfaches Einklipsen des zweiten Trägers 250 auf die Fahrzeugkarosserie 15 gemäß der zweiten Rastverbindung dem elektrisch leitfähigen Kontaktstreifen 210 zugeführt werden.

Die zweite Rastverbindung ist lösbar ausgebildet, sie kann durch einfaches Zurückbiegen der Rasthaken 305 und Entfernen des zweiten Trägers 250 von der Fahrzeugkarosserie 15 gelöst werden. Die erste Rastverbindung gemäß der zweiten Ausführungsform und der dritten Ausführungsform nach Figur 5 und Figur 6 kann nicht lösbar ausgeführt sein, wenn kein Zugang zur Rastöffnung 245 des Dübels 200 geschaffen wird, über den die Rastnase 240 des äußeren Befestigungsteils 205 zurückgedrückt werden könnte.

In einer weiteren nicht dargestellten Ausführungsform kann es auch vorgesehen sein, das äußere Befestigungsteil 205 mittels Schraubverbindung gemäß der ersten Ausführungsform nach Figur 3 mit dem Dübel 200 zu befestigen und das erste Antennenkabel 50 wie bei der dritten Ausführungsform nach Figur 6 mittels der zweiten Rastverbindung dem elektrisch leitfähigen Kontaktstreifen 210 zuzuführen.

In diesem Falle wäre sowohl die Verbindung zwischen dem äußeren Befestigungsteil 205 und dem Dübel 200 als auch die Verbindung zwischen dem zweiten Träger 250 und der Fahrzeugkarosserie 15 lösbar. Wie beschrieben, gehört bei der dritten Ausführungsform nach Figur 6 auch der zweite Träger 250 ergänzend zum elektrisch leitfähigen Kontaktstreifen 210 noch zum inneren Kontaktteil, da er insbesondere auch die Kontaktierung des Außenleiters 225 mit der Fahrzeugkarosserie 15 sicherstellt.

Bei der ersten Ausführungsform nach Figur 3 ist das äußere Befestigungsteil 205 in Form der Schraube lösbar mit dem Dübel 200 verbunden, wohingegen der elektrisch leitfähige Kontaktstreifen 210 als inneres Kontaktteil fest mit dem Dübel 200 verbunden ist. Bei der zweiten Ausführungsform nach Figur 5 ist sowohl die Verbindung zwischen dem äußeren Befestigungsteil 205 und dem Dübel 200 als auch die Verbindung zwischen dem Dübel 200 und dem als inneres Kontaktteil ausgebildeten elektrisch leitfähigen Kontaktstreifen 210 fest, wenn die erste Rastverbindung nicht lösbar ausgeführt ist. Andernfalls ist bei der zweiten Ausführungsform nach Figur 5 wie bei der ersten Ausführungsform nach Figur 3 das äußere Befestigungsteil 205 lösbar mit dem Dübel 200 verbunden, während das innere Kontaktteil 210 in Form des elektrisch leitfähigen Kontaktstreifens fest mit dem Dübel 200 verbunden ist Bei der nicht dargestellten vierten Ausführungsform, bei der das äußere Befestigungsteil 205 gemäß der ersten Ausführungsform und das innere Kontaktteil gemäß der dritten Ausführungsform realisiert sind, ist sowohl das äußere Befestigungsteil 205 lösbar mit dem Dübel 200 verbunden als auch das innere Kontaktteil 210.

Die Befestigung der elektrisch leitfähigen Fläche 5 an der Fahrzeugkarosserie 15 und deren elektrischer Anschluss wurde beispielhaft am ersten Antennenanschluss 30 und dem zugeordneten ersten Antennenkabel 50 beschrieben. In entsprechender Weise kann die elektrisch leitfähige Fläche 5 auch an allen anderen vorhandenen Antennenanschlüssen mechanisch mit der Fahrzeugkarosserie 15 und elektrisch mit dem jeweils zugeordneten Antennenkabel verbunden sein.

Die verwendeten elektrisch isolierenden, insbesondere aus Kunststoff gebildeten Teile weisen nur geringe dielektrische Verluste im für die Stoßfängetantennenanordnung 1 vorgesehenen Frequenzbereich auf.

## Patentansprüche

1. Stoßfängerantennenanordnung (1) mit einem Antennenelement (5) in einem Stoßfänger (10) einer Fahrzeugkarosserie (15), wobei das Antennenelement (5) durch eine elektrisch leitfähige Fläche (5) im Stoßfänger (10) gebildet ist, wobei an mindestens zwei verschiedenen Stellen der elektrisch leitfähigen Fläche (5) ein Antennenanschluss (30, 35, 40, 45) vorgesehen ist, **dadurch gekennzeichnet, dass** die elektrisch leitfähige Fläche (5) an einer der Fahrzeugkarosserie (15) zugewandten Seite einen ersten Schlitz (20) zum Karosserieblech (25) bildet, der geeignet ist eine elektromagnetische Welle zu führen und dass die elektrisch leitfähige Fläche (5) mindestens einen weiteren Schlitz (95, 100, 110) umfasst, der senkrecht zum ersten Schlitz (20) angeordnet ist, um die auf der elektrisch leitfähigen Fläche (5) fließenden Ströme umzulenken, so dass Stromflusswege verlängert werden.

2. Stoßfängerantennenanordnung (1) nach Anspruch 1, **dadurch gekennzeichnet, dass** die Antennenanschlüsse (30, 35, 40, 45) über jeweils ein Antennenkabel (50, 55, 60, 65) mit einem Diversity-Empfänger (70) verbunden sind.

3. Stoßfängerantennenanordnung (1) nach Anspruch 1 oder 2, **dadurch gekennzeichnet, dass** sich die elektrisch leitfähige Fläche (5) über die gesamte Breite des Stoßfängers (10) erstreckt.

4. Stoßfängerantennenanordnung (1) nach Anspruch 1, 2 oder 3, **dadurch gekennzeichnet, dass** die Positionen der Antennenanschlüsse (30, 35, 40, 45) auf der elektrisch leitfähigen Fläche (5) so gewählt sind, dass sie mindestens um eine vorgegebene Distanz beabstandet sind, wobei die Distanz derart vorgegeben ist, dass sich die für die einzelnen Antennenanschlüsse (30, 35, 40, 45) ergebenden Antennensignale wesentlich voneinander unterscheiden.

5. Stoßfängerantennenanordnung (1) nach Anspruch 2, 3 oder 4, **dadurch gekennzeichnet, dass** gleichzeitig mehrere Eingänge (75, 80, 85, 90) des Diversity-Empfängers (70) aktiv sind.

6. Stoßfängerantennenanordnung (1) nach einem der Ansprüche 2 bis 5, **dadurch gekennzeichnet, dass** die nicht aktiven Eingänge des Diversity-Empfängers (70) elektrisch vom jeweils zugehörigen Antennenanschtuss (30, 35, 40, 45) getrennt sind.

7. Stoßfängerantennenanordnung (1) nach Anspruch 6, **dadurch gekennzeichnet, dass** ein gesteuerter Schalter (115), insbesondere eine PIN-Diode, vorgesehen ist, der einen nicht aktiven Eingang des Diversity-Empfängers (70) vom zugehörigen Antennenanschluss (30, 35, 40, 45) trennt.

8. Stoßfängerantennenanordnung (1) nach Anspruch 7, **dadurch gekennzeichnet, dass** die Ansteuerung des gesteuerten Schalters (115) durch Übertragung eines Steuersignals auf dem dem Schalter (115) zugeordneten Antennenkabel erfolgt, wobei das Steuersignal einem Antennensignal überlagert ist.

## Claims

1. Bumper antenna arrangement (1) having an antenna element (5) in a bumper (10) on a vehicle body (15), where the antenna element (5) is formed by an electrically conductive area (5) in the bumper (10), an antenna connection (30, 35, 40, 45) being provided at at least two different points on the electrically conductive area (5), **characterized in that** a side of the electrically conductive area (5) which faces the vehicle body (15) forms a first slot (20) for the body sheet (25) which is suitable for guiding an electromagnetic wave, and **in that** the electrically conductive area (5) comprises at least one further slot (95, 100, 110) which is arranged at right angles to the first slot (20) in order to deflect the currents flowing on the electrically conductive area (5), so that current flow paths are extended.

2. Bumper antenna arrangement (1) according to Claim 1, **characterized in that** the antenna connections (30, 35, 40, 45) are connected to a diversity receiver (70) by means of a respective antenna cable (50, 55, 60, 65).

3. Bumper antenna arrangement (1) according to Claim 1 or 2, **characterized in that** the electrically conductive area (5) extends over the entire width of the bumper (10).

4. Bumper antenna arrangement (1) according to Claim 1, 2 or 3, **characterized in that** the positions of the antenna connections (30, 35, 40, 45) on the electrically conductive area (5) are chosen such that they are at least a prescribed distance apart, the distance being prescribed such that the antenna signals produced for the individual antenna connections (30, 35, 40, 45) are substantially different from one another.

5. Bumper antenna arrangement (1) according to Claim 2, 3 or 4, **characterized in that** a plurality of inputs (75, 80, 85, 90) of the diversity receiver (70) are active simultaneously.

6. Bumper antenna arrangement (1) according to one of Claims 2 to 5, **characterized in that** the non-active inputs of the diversity receiver (70) are electrically isolated from the respective associated antenna connection (30, 35, 40, 45).

7. Bumper antenna arrangement (1) according to Claim 6, **characterized in that** a controlled switch (115), particularly a PIN diode, is provided which isolates a non-active input of the diversity receiver (70) from the associated antenna connection (30, 35, 40, 45).

8. Bumper antenna arrangement (1) according to Claim 7, **characterized in that** the controlled switch (115) is actuated by virtue of a control signal being transmitted on the antenna cable associated with the switch (115), the control signal being overlaid on an antenna signal.

## Revendications

1. Dispositif de pare-choc à antennes (1) comportant un élément d'antennes (5) logé dans un pare-choc (10) d'une carrosserie de véhicule (15),
l'élément d'antennes (5) étant formé par une surface électroconductrice (5) du pare-choc (10), et
à deux endroits différents de la surface électroconductrice (5), il y a un branchement d'antenne (30, 35, 40, 45),
**caractérisé en ce que**
la surface électroconductrice (5) forme une première fente (20) par rapport à la tôle de carrosserie (25) du côté tourné vers la carrosserie (15) du véhicule, cette fente (20) permettant de guider une onde électromagnétique, et
la surface électroconductrice (5) ayant au moins une autre fente (95, 100, 110) perpendiculaire à la première fente (20), pour dévier les courants passant dans la surface électroconductrice (5) pour allonger les chemins de passage des courants.

2. Dispositif de pare-choc équipé d'antennes (1) selon la revendication 1,
**caractérisé en ce que**
les branchements d'antennes (30, 35, 40, 45) sont reliés respectivement par un câble d'antenne (50, 55, 60, 65) à un récepteur en diversité (70).

3. Dispositif de pare-choc équipé d'antennes (1) selon l'une quelconque des revendications 1 ou 2,
**caractérisé en ce que**
la surface électroconductrice (5) occupe toute la largeur du pare-choc (10).

4. Dispositif de pare-choc équipé d'antennes (1) selon l'une quelconque des revendications 1, 2, 3,
**caractérisé en ce que**
l'on choisit les positions des branchements d'antennes (30, 35, 40, 45) sur la surface électroconductrice (5) pour que ces positions soient écartées au moins d'une distance prédéfinie,
la distance étant prédéfinie pour que les signaux d'antennes issus des différents branchements d'antennes (30, 35, 40, 45) soient très différents les uns des autres.

5. Dispositif de pare-choc équipé d'antennes (1) selon l'une quelconque des revendications 2, 3, 4,
**caractérisé en ce que**
simultanément plusieurs entrées (75, 80, 85, 90) du récepteur en diversité (70) sont activées.

6. Dispositif de pare-choc équipé d'antennes (1) selon l'une quelconque des revendications 2 à 5,
**caractérisé en ce que**
les entrées non activées du récepteur en diversité (70) sont séparées électriquement du branchement d'antenne correspondant (30, 35, 40, 45).

7. Dispositif de pare-choc équipé d'antennes (1) selon la revendication 6,
**caractérisé par**
un commutateur commandé (115) notamment une diode PIN qui sépare une entrée non active du récepteur en diversité (70) et le branchement d'antenne correspondant (30, 35, 40, 45).

8. Dispositif de pare-choc équipé d'antennes (1) selon la revendication 7,
**caractérisé en ce que**
la commande du commutateur commandé (115) se fait par la transmission d'un signal de commande par le câble d'antenne associé au commutateur (115), le signal de commande étant combiné au signal d'antenne.
